Europäisches Patentamt

European Patent Office

Office européen des brevets

(11) Publication number: **0 134 702**
**B1**

(12) EUROPEAN PATENT SPECIFICATION

(45) Date of publication of patent specification: 17.05.89

(51) Int. Cl.⁴: **B 21 F 11/00**

(21) Application number: 84305289.5

(22) Date of filing: 03.08.84

(54) Apparatus for cutting electric wire in specified length.

(30) Priority: 04.08.83 JP 143321/83

(43) Date of publication of application:
20.03.85 Bulletin 85/12

(45) Publication of the grant of the patent:
17.05.89 Bulletin 89/20

(84) Designated Contracting States:
DE FR GB

(56) References cited:
CH-A- 567 913
DE-A-3 104 356
DE-B-1 129 443
GB-A- 113 507
GB-A-1 432 038
US-A- 988 197

SOVIET INVENTIONS ILLUSTRATED, sections
P,Q, week E 04, March 10, 1982, DERWENT
PUBLICATIONS LTD., London, page 11

(73) Proprietor: CKD Corporation
3005, Aza Hayasaki Oaza Kitatoyama
Komaki-shi Aichi-Ken (JP)

(73) Proprietor: SUMITOMO ELECTRIC INDUSTRIES
LIMITED
No. 15, Kitahama 5-chome Higashi-ku
Osaka-shi Osaka 541 (JP)

(73) Proprietor: Sumitomo Wiring Systems, Ltd.
1-14, Nishisuehirocho
Yokkaichi-shi Mie-ken (JP)

(72) Inventor: Kusumi, Saburo
3005, Aza Hayasaki Oaza Kitatoyama
Komaki-shi (JP)
Inventor: Nishikawa, Kazuo
3005, Aza Hayasaki Oaza Kitatoyama
Komaki-shi (JP)
Inventor: Fukuda, Michio
1-3, Shimaya-1-chome
Konohana-ku Osaka (JP)
Inventor: Okunishi, Toshifumi
1-3, Shimaya-1-chome
Konohana-ku Osaka (JP)
Inventor: Miwa, Sinkichi
1-14, Nishisuehirocho
Yokkaichi-shi (JP)
Inventor: Ohta, Yosinobu
1-14, Nishisuehirocho
Yokkaichi-shi (JP)

(56) References cited:
**SOVIET INVENTIONS ILLUSTRATED, sections, P,Q, week D 39, November 4, 1981, DERWENT PUBLICATIONS LTD., London, page 16**

**SOVIET INVENTIONS ILLUSTRATED, sections P,Q, week B 48, January 16, 1980, DERWENT PUBLICATIONS LTD., London, page 4**

(74) Representative: **Topps, Ronald et al D. YOUNG & CO 10 Staple Inn London WC1V 7RD (GB)**

## Description

The present invention relates to an apparatus for cutting an electric wire into pieces of a specified length or lengths in accordance with desired uses.

A conventional apparatus for cutting a long electric wire into pieces of a desired length or lengths incorporates a pair of feed rollers for feeding and clamping the wire to be cut. The cutting length is regulated through control of the length of the feed which in turn is determined by the number of rotations of the feed rollers. In consequence, a small error in the cutting length is inevitable due to a small error in the feed length attributable to back-lash in the feed-roller driving system, as well as to slip between the wire and the feed rollers. Since any wire cut shorter than the required length has to be disposed of, it is common practice to cut the wire with a considerable margin of latitude over the cutting length, which uneconomically consumes additional electric wire.

GB—A—1 432 038 discloses apparatus for cutting an iron rod into pieces of selected length, the apparatus comprising a carriage movable along a guide beam by a motor and chain drive transmission, the carriage being provided with a gripper for gripping the free end of the rod. The carriage is moved back along the beam as far as a limit switch which stops the drive motor and the length of iron rod is cut by a fixed cutter.

According to the present invention, there is provided an apparatus for cutting a continuous length of electric wire into pieces of a predetermined length or lengths, comprising a guide track, a carriage movable along the track in the longitudinal direction of the wire, clamping means carried by the carriage for gripping the end of the wire, the carriage and the track being located at a lateral spacing from the path of the wire and disposed parallel with said path, a pulse motor and a non-slip drive transmission for driving the carriage along the track, the non-slip drive transmission comprising a toothed endless belt engaged with a toothed pulley driven by the pulse motor, a guide sleeve through which the wire to be cut is fed, and a cutter for cutting the wire, the cutter being movable to bring its cutting blades into and out of the path along which the wire is fed.

An embodiment of the invention will now be described, by way of an example, with reference to the accompanying drawings, in which:

Fig. 1 is a plan view of an embodiment of the invention; and

Fig. 2 is a partly cut-away side elevational view of the embodiment shown in Fig. 1.

Referring to the Figures, an apparatus embodying the invention for cutting an electric wire into specified lengths has a horizontal bed 1 on one end of which is mounted a support frame 2 which in turn carries a straightening roller assembly 3. The roller assembly 3 has two groups of rollers: namely, a first group of rollers having two vertically-spaced rows of rollers; and a second group having two horizontally-spaced rows of rollers, so that the electric wire runs along a path defined between two rows of rollers in both roller groups. A guide sleeve 4 having a wire feed port for feeding the electric wire is fixed to the support frame 2 in such a manner that the feeder port is aligned with the above-mentioned path of wire in the straightening roller assembly 3. A long continuous length of electric wire a is coiled on a turn table b which is disposed behind the frame 2. The arrangement is such that the uncoiled electric wire a is straightened as it passes through the straightening roller assembly 3 and is then fed forwardly through the guide sleeve 4.

A track 5 is supported from the bed 1 through supporting legs 6 so as to extend in parallel with and at a small lateral distance from the path of the electric wire a fed through the guide sleeve 4.

A support bracket 7 mounted on the end of the bed 1 opposite to the turn table b carries a pulse motor 8 having a horizontal rotor shaft to which is fixed a toothed pulley 9. Another support bracket 10 is mounted on the bed 1 at the upstream side of the running guide 5 as viewed in the direction of feed of the electric wire a. The support bracket 10 rotatably carries a toothed pulley 11. An endless toothed belt 12 is stretched between the two toothed pulleys 9 and 11, such that the upper run and the lower run of the endless belt 12 extend substantially along the upper and lower surfaces of the running guide 5. The upper surface of the guide track 5 carries a carriage 13 straddling the upper run of the toothed belt 12. The carriage 13 has a multiplicity of wheels 14 which are disposed to roll along the upper, lower and both side surfaces of the guide track 5, so that the carriage 13 runs above the upper run of the toothed belt 12. A clamp device 16 is carried by an arm 15 extending laterally from the upper surface of the carriage 13, the device 16 being in alignment with the path of the electric wire a fed through the guide sleeve 4. More specifically, the clamp device 16 has an elongated carrier 17 mounted on the arm 15, an upwardly directed clamping jaw 18 pivotally secured to one end of the carrier 17, a lever 19 rockably supported by a shaft 21 on the same end of the carrier 17, and a downward clamping jaw 20 which is provided on one end of the lever 19 for rocking motion by the force of gravity. The downward clamping jaw 20 cooperates with the upward clamping jaw 18 to clamp the electric wire a therebetween. A pneumatic cylinder 22 is rockably mounted on the rear end of the carrier 17 by means of a shaft 23. The pneumatic cylinder 22 has a piston rod 24 the free end of which is pivotally connected to the rear end of the lever 19.

A stand 26 is provided on the portion of the bed 1 just downstream from the frame 2. A lift 27 is arranged to be moved up and down along a sliding guide surface formed on the front side of the stand 26. A cutter 28 constituted by a pair of cutting blades is carried by the lift 27. The cutting blades are movable horizontally towards and away from each other. A pneumatic cylinder 29 is secured to the lower side of the bed 1 so as to extend downwardly therefrom and has a piston rod 30 the free end of which is connected to the lift 27. The arrangement is such that, when the piston rod 30 is extended, the lift 27 is moved upwardly together with the cutter 28 with the cutting blades thereof kept apart from each other. As the cutter 28 reaches the path along which the electric wire *a* is fed, the cutting blades are moved towards each other to cut the electric wire *a*. Then, the piston rod 30 is retracted to move the cutter 28 downwardly while moving the cutting blades away from each other.

The described embodiment of the cutting apparatus operates in a manner which will be explained hereinunder.

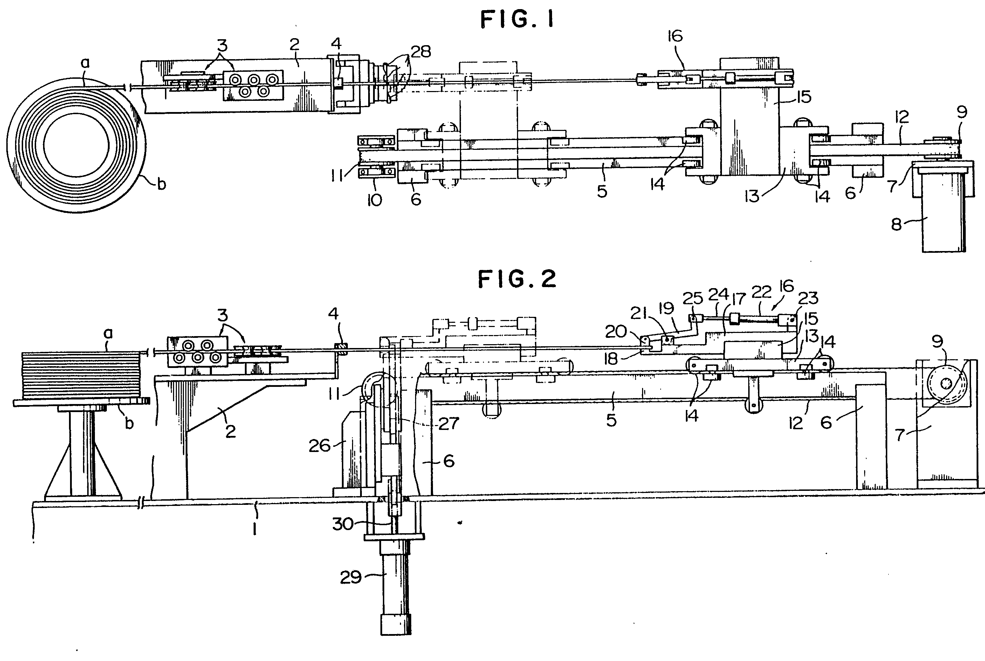

When the cutter 28 is stationed at the lower position as shown by solid lines, the endless belt 12 is driven by the pulse motor 8 so as to drive the carriage 13 towards the frame 2. The pulse motor 8 is stopped when the carriage 13 has reached a position near the rear end of the track 5. Then the piston rod 24 of the pneumatic cylinder 22 in the clamp device 16 is extended to swing the lever 19 counter-clockwise as viewed in Fig. 2, so that the end of the electric wire *a* led from the guide sleeve 4 is clamped between the upper and lower clamping jaws 20 and 18. Then, the pulse motor 8 is reversed to drive the toothed belt 12 and, hence, the carriage 13 and the clamp device 16 backwardly. It will be clear to those skilled in the art that the length of the feed of the electric wire *a*, i.e. the travel of the clamp device 16, corresponds to the number of pulses inputted to the pulse motor 8. When a predetermined number of pulses have been counted, i.e., when a specified length of the electric wire *a* has been fed, the pulse input to the pulse motor 8 is stopped so that the carriage 13 and the clamp device 16 are stopped at the position illustrated by solid lines. Then, the cutter 28 is raised as shown by chain lines and the cutting blades are moved towards each other to cut the electric wire *a*. Thereafter, the cutter 28 is lowered again while its cutting blades are moved away from each other. The cut piece of the electric wire *a* is released from the clamp device 16 as the upper jaw 20 is swung away from the lower clamping jaws by a retraction of the piston rod 24 of the pneumatic cylinder 22. The length of cut wire is then transferred to the next step of a process, by means of a transfer device which is not shown. The described operation is repeated cyclically to successively cut the electric wire *a* coming through the guide sleeve 4 into pieces of the specified length.

As will be fully understood from the foregoing description, the length of feed of the electric wire *a* is controlled precisely because the electric wire *a* is pulled by a clamp device driven by the power of the pulse motor which operates precisely in response to the number of the inputted pulses and transmitted through a non-slip transmission system constituted by the toothed endless belt and the toothed pulleys. It is, therefore, possible to cut a long length of electric wire into pieces of a specified length or lengths.

## Claims

1. An apparatus for cutting a continuous length of electric wire (a) into pieces of a predetermined length or lengths, comprising a guide track (5), a carriage (13) movable along the track (5) in the longitudinal direction of the wire (a), clamping means (16) carried by the carriage (13) for gripping the end of the wire (a), the carriage (13) and the track (5) being located at a lateral spacing from the path of the wire (a) and disposed parallel with said path, a pulse motor (8) and a non-slip drive transmission (9, 12) for driving the carriage (13) along the track (5), the non-slip drive transmission comprising a toothed endless belt (12) engaged with a toothed pulley (9) driven by the pulse motor (8), a guide sleeve (4) through which the wire (a) to be cut is fed, and a cutter (28) for cutting the wire (a), the cutter (28) being movable to bring its cutting blades into and out of the path along which the wire (a) is fed.

2. An apparatus as claimed in claim 1, in which a wire straightening means (3) is disposed upstream of the guide sleeve (4).

## Patentansprüche

1. Vorrichtung zum Schneiden einer kontinuierlichen Länge von elektrischem Draht (a) in Stücke vorbestimmter Länge oder Längen, enthaltend eine Führungsbahn (5), einen Schlitten (13), der längs der Bahn (5) in der Längsrichtung des Drahtes (a) beweglich ist, eine von dem Schlitten (13) getragene Klemmvorrichtung (16) zum Greifen des Endes des Drahtes (a), wobei der Schlitten (13) und die Bahn (5) in einem Querabstand zum Weg des Drahtes (a) gelegen und parallel zu dem genannten Weg angeordnet sind, einen Impulsmotor (8) und eine schlupffreie Antriebseinrichtung (9, 12) zum Antreiben des Schlittens (13) längs der Bahn (5), wobei die schlupffreie Antriebseinrichtung einen endlosen Zahnriemen (12) enthält, der mit einem von dem Impulsmotor (8) angetriebenen Zahnrad (9) in Eingriff ist, eine Führungshülse (4), durch die der zu zerschniedende Draht (a) geführt ist, und eine Schneidvorrichtung (28) zum Zerschneiden des Drahtes (a), welche Schneidvorrichtung (28) beweglich ist, um ihre Schneidklingen in den und aus dem Weg zu bringen, längs welchem der Draht (a) gefördert wird.

2. Vorrichtung nach Anspruch 1, bei der eine Richteinrichtung (3) zum Geraderichten des Drahtes stromaufwärts der Führungshülse (4) angeordnet ist.

## Revendications

1. Machine à couper une longueur continue d'un fil électrique (a) en tronçons d'une ou de plusieurs longueurs prédéterminées, comprenant une glissière de guidage (5), un chariot (13) déplaçable le long de la glissière (5) dans le sens longitudinal du fil (a), un moyen de serrage (16) supporté par le chariot (13) servant à serrer l'extrémité du fil (a), le chariot (13) et la glissière (5) étant situés avec un espacement latéral par rapport au trajet du fil (a) et disposés parallèlement audit trajet, un moteur pas à pas (8) et une transmission d'entraînement antiglissante (9, 12) servant à entraîner le chariot (13) le long de la glissière (5), la transmission d'entraînement non glissante comprenant une courroie sans fin dentée (12) en prise avec une poulie dentée (9) entraînée par le moteur pas à pas (8), un manchon de guidage (4) à travers lequel est avancé le fil (a) devant être coupé, et un outil de coupe (28) servant à couper le fil (a), l'outil de coupe (28) étant déplaçable pour amener ses lames coupantes sur le trajet le long duquel le fil (a) est avancé et pour les en retirer.

2. Machine selon la revendication 1, dans laquelle un moyen de dressage du fil (3) est disposé en amont du manchon de guidage (4).

FIG. I

FIG. 2